# EUROPEAN PATENT APPLICATION

(11) **EP 1 903 079 A1**
(43) Date of publication of application: **26.03.2008**
(21) Application number: 07018610.1
(22) Date of filing: 21.09.2007
(51) Int. Cl.: C09D 11/00, B41C 1/10

(54) **Ink composition and process of making lithographic printing plate**

(30) Priority: 22.09.2006 JP 2006257555
(71) Applicant: FUJIFILM Corporation, Minato-ku Tokyo (JP)
(72) Inventor: Sakasai, Yutaka, Haibara-gun Shizuoka (JP)
(74) Representative: HOFFMANN EITLE

(57) **Abstract**

An ink composition contains: from 60% to 99% by weight of an organic solvent having a boiling point of from 110° to 210°C; a colorant; and from 0.5% to 35% by weight of an oleophilic polymer.

## Description

### FIELD OF THE INVENTION

This invention relates to an ink composition and a process of making a lithographic printing plate. More particularly, it relates to an ink composition for inkjet recording and a process of making a lithographic printing plate using the ink composition.

### BACKGROUND OF THE INVENTION

Digitization technology for electronically processing, storing and outputting image information by use of a computer has recently been widespread. A variety of new image output systems that can keep up with such digitizationtechnology have now come to be practical. Under these circumstances, attention has been paid to the computer-to-plate (CTP) technique, in which digitized information is carried on a highly convergent radiation such as a laser beam, and a lithographic printing plate precursor is scan-exposed to the light, thereby to directly manufacture a lithographic printing plate without using a lith film.

In addition to the CTP technique using a laser beam, a CTP technique using an inkjet recording system is also known.

JP-A-5-204138 and US Patent 6,742,886 disclose platemaking processes comprising forming an image area on a support by inkjet recording using an ink composition and exposing the ink image to light to cure the ink composition. Inkjet recording is a relatively high-speed image output system, and the equipment therefor is structurally simple because a complicated optical system is unnecessary. Since an image is formed of inkjet ink, there is no need to provide a coating film such as a photosensitive layer on the support on which an image is formed. Accordingly, to adopt the inkjet recording system in lithographic platemaking is effective on cost reduction.

### SUMMARY OF THE INVENTION

When an image area is formed by a conventional inkjet recording system using a photo-curable ink composition as in JP-A-5-204138, almost all of the ejected ink cures to form an image area that has a certain height with a certain volume and a semispherical shape on the support. In the printing process using the resulting plate, a large dot gain on the press occurs, in which the dots print extraordinarily larger than they should. Such a large dot gain on press is considered attributable to that fact that the printing ink fed to the plate spreads along the semispherical profile of the image area when transferred from the plate to the blanket and, as a result, adheres to a wider area than it should.

On the other hand, the method of US Patent 6,742,886, which does not rely on photo curing, uses a solvent ink prepared by dissolving a polymer in a solvent that is jetted followed by removal of the solvent to form an image area. This technique needs a longer time for the ink to dry than the time required for a photo-curing ink to cure, which can cause ink feathering or beading up on the support. Heat may be applied to accelerate evaporation of the solvent, but a high heating temperature could deform (expand) the aluminum support, resulting in reduction of positional accuracy of inkjet recording, which leads to poor registration accuracy in printing.

An object of the present invention is to provide an ink composition that can be used to form an image area by inkjet recording in the preparation of lithographic printing plate. The ink composition does not feather nor bead up in image formation and provides a lithographic printing plate capable of printing with reduced dot gain.

Another object of the invention is to provide a process of making a lithographic printing plate featuring the use of the ink composition. The process suppresses thermal deformation (expansion) of the support to secure positional accuracy in inkjet recording and registration accuracy in printing.

The present invention provides an ink composition that_ is used to form an image by inkjet recording on a water soluble polymer-containing ink receptive layer provided on a support. The ink composition contains 60% to 99% by weight of an organic solvent having a boiling point of 110° to 210°C, a colorant, and 0.5% to 35% by weight of an oleophilic polymer.

The invention also provides a process of making a lithographic printing plate including the steps of forming an image on an ink receptive layer provided on a support by inkjet recording using the ink composition of the invention, and evaporating the solvent from the image formed of the ink composition at a temperature of 45°C or lower.

The solvent ink composition of the invention contains an organic solvent having a specific boiling point and an oleophilic polymer in specific amounts. The image area is formed of the ink composition on an ink receptive layer containing a water soluble polymer. Therefore, dot gain on press is reduced, and ink feathering and beading-up during image formation on a support can be prevented.

In the platemaking, since the ink heating temperature is 45°C or lower, thermal deformation (expansion) of a support can be suppressed thereby securing positional accuracy in inkjet recording and registration accuracy in printing.

### DETAILED DESCRIPTION OF THE INVENTION

### [I] Ink composition

The organic solvent that can be used in the ink composition of the present invention has a boiling point ranging from 110° to 210°C, preferably 120° to 200°C. An organic solvent the boiling point of which is lower than 110°C dries rapidly, which is advantageous for preventing ink from feathering and beading up but often causes head nozzle clogging. Such low boiling organic solvents are generally low-molecular-weight and highly polar solvents that are liable to corrode a head member or an ink path member of inkjet recording equipment. Their ignition points are close to room temperature, which involves danger of fire. Solvents the boiling point of which exceeds 210°C takes time to dry and easily feather or bead up.

A solvent having a boiling point lower than 110°C and/or a solvent having a boiling point higher than 210°C could be used in combination with the solvent having a boiling point of 110° to 210°C. It is desirable, however, that the proportion of the former solvent is 10% by weight or less in the total solvent of the ink composition. Otherwise, the problems described above would occur.

The proportion of the organic solvent in the ink composition is 60% by 99% by weight, preferably 65% to 98% by weight, still preferably 70 to 95% by weight. If it is less than 60%, the image area height cannot be controlled, the image area flatness cannot be achieved, and extraordinary dot gain results. If it is more than 99%, the resulting printing plate tends to have deteriorated print qualities and reduced press life.

Examples of preferred organic solvents include ethylene glycol, ethylene glycol monoethyl ether, ethylene glycol monobutyl ether, ethylene glycol monoethyl ether acetate, ethylene glycol monobutylether acetate, diethylene glycol monoethyl ether, diethylene glycol diethyl ether, propylene glycol, propylene glycol monoethyl ether, propylene glycol monopropyl ether, propylene glycol monobutyl ether, propylene glycol monoacetate, propylene glycoldiacetate, propylene glycol monomethyl ether acetate, dipropylene glycol monomethyl ether, dipropylene glycol monoethyl ether, dipropylene glycol dimethyl ether, dipropylene glycol monomethyl ether acetate, 3-methoxy-1-butanol, 3-methoxybutyl acetate, 1,3-butanediol, benzyl alcohol, methyl lactate, ethyl lactate, t-butanol, and 2-pentanol. Still preferred of them are propylene glycol monomethyl ether acetate, dipropylene glycol dimethyl ether, 3-methoxy-1-butanol, and ethyl lactate.

The oleophilic polymer that can be used in the ink composition of the invention preferably has a weight average molecular weight of 5, 000 to 200, 000, more preferably 10, 000 to 100,000. Polymers having a weight average molecular weight of 5,000 or more are not so brittle as to reduce the press life and have moderate solubility in an organic solvent to provide an image area having a reduced height and causing little dot gain. Polymers having a weight average molecular weight of 200,000 or less have moderate solubility in an organic solvent thereby to prevent ejection troubles.

As used herein, the term "oleophilic polymer" is intended to mean a polymer having a solubility of 5 g or less, preferably 3 g or less, in 100 g water at 25°C.

The oleophilic polymer is preferably a polymer obtained by using 40 to 100 mol% of a radically polymerizable monomer represented by formula (I): 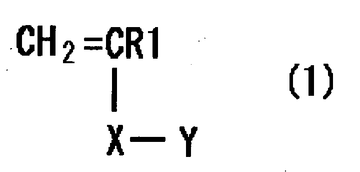 wherein R¹ represents a hydrogen atom or a methyl group; X represents a single bond, -COO- or -CONR²-; R² represents a hydrogen atom or a hydrocarbon group having 12 or fewer carbon atoms; Y represents a hydrocarbon group having 1 to 20 carbon atoms.

In formula (I), the hydrocarbon group may contain an ether linkage, an ester linkage or an amido linkage in the molecule thereof and/or be substituted with a hydroxyl group, a carboxyl group or a halogen atom.

Examples of preferred radically polymerizable monomers include styrene, p-methoxystyrene, methyl (meth)acrylate, ethyl (meth)acrylate, allyl (meth)acrylate, butyl (meth)acrylate, hexyl (meth)acrylate, 2-ethylhexyl (meth)acrylate, octyl (meth)acrylate, decyl (meth)acrylate, stearyl (meth)acrylate, cyclohexyl (meth)acrylate, bornyl (meth)acrylate, isobornyl (meth)acrylate, benzyl (meth)acrylate, 2-ethylhexyl diglycol (meth)acrylate, butoxyethyl (meth)acrylate, butoxymethyl (meth)acrylate, 3-methoxybutyl (meth)acrylate, 2-(2-methoxyethoxy)ethyl (meth)acrylate, 2-(2-butoxyethoxy)ethyl (meth)acrylate, 2,2,2-tetrafluoroethyl (meth)acrylate, 1H,1H,2H,2H-perfluorodecyl (meth)acrylate, 4-butylphenyl (meth)acrylate, phenyl (meth)acrylate, 2,4,5-tetramethylphenyl (meth)acrylate, 4-chlorophenyl (meth)acrylate, phenoxymethyl (meth)acrylate, phenoxyethyl (meth)acrylate, glycidyl (meth)acrylate, glycidyloxybutyl (meth)acrylate, glycidyloxyethyl (meth)acrylate, glycidyloxypropyl (meth)acrylate, tetrahydrofurfuryl (meth)acrylate, 2-hydroxyethyl (meth)acrylate, 3-hydroxypropyl (meth)acrylate, 2-hydroxypropyl (meth)acrylate, 2-hydroxybutyl (meth)acrylate, 4-hydroxybutyl (meth)acrylate, 3-hydroxypropyl (meth)acrylate, 2-methacryloyloxyethylsuccinic acid, 2-methacryloyloxyhexahydrophthalic acid, 2-methacryloyloxyethyl 2-hydroxypropylphthalate, butoxydiethylene glycol (meth)acrylate, trifluoroethyl (meth)acrylate, perfluorooctylethyl (meth)acrylate, 2-hydroxy-3-phenoxypropyl (meth)acrylate, (meth)acrylamide, N-butyl(meth)acrylamide, N-p-hydroxyphenyl (meth)acrylamide, and p-sulfamoylphenyl (meth)acrylamide.

If desired, other radically polymerizable monomers may be used in combination.

Of the oleophilic polymers preferred are (meth)acrylate resins obtained by polymerizing a monomer of formula (I) in which X is -COO- and styrene resins obtained by polymerizing a monomer of formula (I) in which X is a single bond, and Y is styrene or a derivative thereof.

The oleophilic polymer content in the ink composition should range from 0.5% to 35% by weight. If it is less than 0.5%, the improving effect of the polymer on press life is not manifested. If it is more than 35%, ink ejection stability reduces. The oleophilic polymer content is preferably 1% to 30% by weight, still preferably 2% to 20% by weight.

The colorant that can be used in the ink composition of the invention is not particularly limited, and a variety of colorants, including pigments and dyes, can be used as appropriate to the intended use. Oil soluble dyes are particularly preferred in the invention.

Dyes that can be used in the invention are appropriately chosen from conventionally known dye compounds.

Suitable yellow dyes include aryl- or heterylazo dyes having, as a coupler component, phenols, naphthols, anilines, pyrazolones, pyridones, or open-chain active methylene compounds; azomethine dyes having open-chain active methylene compounds as a coupler component; methine dyes, such as benzylidene dyes and monomethine oxonol dyes; and quinone dyes, such as naphthoquinone dyes and anthraquinone dyes. Inaddition, quinophthalonedyes, nitrodyes, nitroso dyes, acridine dyes, and acridinone dyes are also useful.

Examples of suitable magenta dyes include aryl- or heterylazo dyes having, as a coupler component, phenols, naphthols, anilines, pyrazolones, pyridones, pyrazolotriazoles, closed-chain active methylene compounds (e.g., dimedone, barbituric acid, and 4-hydroxycoumarine derivatives) or electron-excessheterorings (e.g.,pyrrole, imidazole, thiophene, and thiazole derivatives); azomethine dyes having pyrazolines or pyrazoloptriazoles as a coupler component; methine dyes, such as arylidene dyes, styryl dyes, merocyanine dyes, and oxonol dyes; carbonium dyes, such as diphenylmethane dyes, triphenylmethane dyes, and xanthene dyes; quinone dyes, such as naphthoquinone dyes, anthraquinone dyes, and anthrapyridone dyes; and condensed polycyclic dyes, such as dioxazine dyes.

Suitable cyan dyes include azomethine dyes, such as indoaniline dyes and indophenol dyes; polymethine dyes, such as cyanine dyes, oxonol dyes, and merocyanine dyes; carbonium dyes, such as diphenylmethane dyes, triphenylmethane dyes, and xanthene dyes; phthalocyanine dyes; anthraquinone dyes; aryl- or heterylazo dyes having, as a coupler component, phenols, naphthols, anilines, pyrrolopyrimidine-one or pyrrolotriazine-one derivatives; and indigo-thioindigo dyes.

Specific examples of useful organic and inorganic pigments that give yellow color include monoazo pigments such as C.I. Pigment Yellow 1 (e.g., Fast Yellow G) and C.I. Pigment Yellow 74, diazo pigments such as C. I. Pigment Yellow 12 (e.g., Diazo Yellow AAA) and C.I. Pigment Yellow 17, non-benzidine azo pigments such as C.I. Pigment Yellow 180, azo lake pigments such as C.I. Pigment Yellow 100 (e.g., Tartrazine Yellow Lake), condensed azo pigments such as C. I. Pigment Yellow 95 (e.g., Condensed Azo Yellow GR), acidic dye lake pigments such as C.I. Pigment Yellow 115 (e.g., Quinoline Yellow Lake), basic dye lake pigments such as C.I. Pigment Yellow 18 (e.g., Thioflavin Lake), anthraquinone pigments such as Flavanthrone Yellow (Y-24), isoindolinone pigments such as Isoindolinone Yellow 3RLT (Y-110), quinophthalone pigments such as Quinophthalone Yellow (Y-138), isoindoline pigments such as Isoindoline Yellow (Y-139), nitroso pigments such as C.I. Pigment Yellow 153 (e.g., Nickel Nitroso Yellow), and metal complex azomethine pigments such as C.I. Pigment Yellow 117 (e.g., Copper Azomethine Yellow).

Specific examples of those giving red or magenta color include monoazo pigments such as C.I. Pigment Red 3 (e.g., Toluidine Red), disazo pigments such as C. I. Pigment Red38 (e.g., Pyrazolone Red B), azo lake pigments such as C.I. Pigment Red 53:1 (e.g., Lake Red C) and C.I. Pigment Red 57:1 (e.g., Brilliant Carmine 6B), condensed azo pigments such as C.I. Pigment Red 144 (e.g., Condensed Azo Red BR), acidic dye lake pigments such as C.I. Pigment Red 174 (e.g., Phloxine B Lake), basic dye lake pigments such as C. I. Pigment Red 81 (e.g., Rhodamine 6G' Lake), anthraquinone pigments such as C.I. Pigment Red 177 (e.g., Dianthraquinonyl Red), thioindigo pigments such as C.I. Pigment Red 88 (e.g., Thioindigo Bordeaux), perynone pigments such as C. I. Pigment Red 194 (e.g., Perynone Red), perylene pigments such as C.I. Pigment Red 149 (e.g., Perylene Scarlet), quinacridone pigments such as C.I. Pigment Violet 19 (unsubstituted quinacridone) and C.I. Pigment Red 122 (Quinacridone Magenta), isoindolinone pigments such as C.I. Pigment Red 180 (e.g., Isoindolinone Red 2BLT), and alizarin lake pigments such as C.I. Pigment Red 83 (e.g., Madder Lake).

Specific examples of those imparting blue or cyan color include disazo pigments such as C.I. Pigment Blue 25 (e.g., Dianisidine Blue), phthalocyanine pigments such as C.I. Pigment Blue 15 (e.g., Phthalocyanine Blue), acidic dye lake pigments such as C.I. Pigment Blue 24 (e.g., Peacock Blue Lake), basic dye lake pigments such as C.I. Pigment Blue 1 (e.g. , Victoria Pure Blue BO Lake), anthraquinone pigments such as C.I. Pigment Blue 60 (e.g., Indanthrone Blue), and alkali blue pigments such as C.I. Pigment Blue 18 (e.g., Alkali Blue V-5:1).

Specific examples of those giving green color include phthalocyanine pigments such as C.I. Pigment Green 7 (Phthalocyanine Green) and C.I. Pigment Green 36 (Phthalocyanine Green) and azo metal complex pigments such as C.I. Pigment Green 8 (Nitroso Green).

Specific examples of those giving orange color include isoindoline pigments such as C.I. Pigment Orange 66 (Isoindoline Orange) and C.I. Pigment Orange 51 (Dichloropyranthrone Orange).

Specific examples of those giving black color include carbon black, titanium black, and aniline black.

Specific examples of useful white pigments include basic lead carbonate (2PbCO₃Pb(OH)₂) called silver white, zinc oxide (ZnO) called zinc white, titanium oxide (TiO₂) calledtitaniumwhite, and strontium titanate (SrTiO₃) called titanium strontium white.

The colorant content in the ink composition is preferably 0.5% to 5% by weight, still preferably 1% to 4% by weight.

The ink composition of the invention may contain various additives according to necessity, such as surface active agents for improving ejection properties and polymerization inhibitors for securing storage stability.

### [II] Support

The support that can be used to make the lithographic printing plate of the present invention preferably has a surface roughness Ra of 0.1 to 10 µm. Ra is an arithmetic average roughness specified in JIS B0601-1994. A small surface roughness means low adhesion to an image layer, resulting in a short press life. Too large a surface roughness results in the formation of thin parts in the image layer, also leading to a reduced press life. The support for use in the invention is not particularly limited in material as long as it is a sheet or plate with adequate strength, durability, and dimensional stability. Examples of suitable supports include paper, paper laminated with plastic (e.g., polyethylene, polypropylene or polystyrene), a plate of metal (e.g., aluminum, zinc or copper), a film ofplastic (e.g., cellulosediacetate, cellulosetriacetate, cellulosepropionate, cellulosebutyrate, cellulose acetate butyrate, cellulose nitrate, polyethylene terephthalate, polyethylene, polystyrene, polypropylene, polycarbonate, or polyvinyl acetate), and paper or plastic film laminated or deposited with metal.

*Inter alia,* preferred in the invention are a polyester film and an aluminum plate. An aluminum plate is especially preferred for good dimensional stability and relative inexpensiveness. The term "aluminum plate" as used herein is intended to include a pure aluminum plate, a plate of an aluminum-based alloy containing trace amounts of other elements, and a plastic film laminated with or deposited with aluminum. The other elements making up the aluminum-based alloy include silicon, iron, manganese, copper, magnesium, chromium, zinc, bismuth, nickel, and titanium. The total content of these other elements in the aluminum alloy is 10% by weight at the most. An aluminum support having been subjected to a surface treatment is preferably used in the invention. In what follows, a preferred aluminum support will be described in more detail.

A pure aluminum plate is particularly preferred in the present invention. In view of refining technological difficulty in obtaining completely pure aluminum, aluminum containing a trace amount of impurity elements will do. Thus, the aluminum plate to be used in the invention is not particularly limited in composition and can be chosen appropriately from plates of aluminum materials known and commonly used in the art. The thickness of an aluminum support used in the invention is usually about 0.1 to 0. 6 mm, preferably 0.15 to 0.4 mm, still preferably 0.15 to 0.3 mm.

Accordingtonecessity, the aluminumplate is subjected to a surface treatment, such as graining or anodizing.

If desired, graining is preceded by degreasing (removal of rolling-mill lubricant) using, e.g., a surface active agent, an organic solvent or an aqueous alkali solution. Aluminum plate graining can be effected by various methods, including mechanical graining, electrochemical graining (electrochemical surface dissolution), chemical graining (selective dissolution of the surface with a chemical), and combinations thereof. Mechanical graining is carried out by ball graining, brushing, sand blasting, buffing, or like techniques. Electrochemical graining is carried out by AC or DC electrolysis in a hydrochloric acid or nitric acid electrolyte. A combined graining method as taught in JP-A-54-63902 is also useful.

The aluminum plate is preferably subjected to surface treatment to have the above-recited surface profile (grain structure). The support for use in the invention is obtained by subjecting the aluminum plate to a graining treatment and an anodizing treatment. This does not mean that the process of preparing the aluminum support is particularly limited, and the process may include other various steps than the graining treatment and the anodizing treatment. Typical surface treatment strategies for achieving the recited surface profile (grain structure) include, but are not limited to, (1) a process comprising, in sequence, mechanical graining, alkali etching, acid desmutting, and electrochemical graining using an electrolyte, (2) a process comprising mechanical graining, alkali etching, acid desmutting, and repetition of electrochemicalgraining using different electrolytic solutions, (3) a process comprising, in sequence, alkali etching, acid desmutting, and electrochemical graining using an electrolytic solution, and (4) a process comprising alkali etching, acid desmutting, and a repetition of electrochemical graining using different electrolytes. In these treatments, the electrochemical graining may be followed by alkali etching and acid desmutting. The aluminum support prepared by these surface treatment processes has such a grain structure as contains two or more superimposed surface profiles of different frequencies. A lithographic printing plate obtained by using such an aluminum support is excellent in anti-smearing properties and press life. Each of the surface treatments will be described in greater detail.

### (1) Mechanical graining

Mechanical graining is an effective means for creating a surface roughness with an average wavelength of 5 to 100 µm at a lower cost than by electrochemical graining. Suitable mechanical graining techniques include wire brush graining in which the surface of the aluminum plate is scratched by metal wire, ball graining in which graining balls and an abrasive are used, and brush graining in which a nylon brush and an abrasive are used as taught in JP-A-6-135175 and JP-B-50-40047. A transfer method is also useful, in which an uneven surface profile is transferred to the aluminum plate. For the details of the transfer method, refer to JP-A-55-74898, JP-A-60-36195, and JP-A-60-203496. Reference can also be made in JP-A-6-55871 disclosing a transfer method in which unevenness transfer is conducted several times and in JP-A-6-24168 disclosing a transfer method characterized in that the uneven surface to be transferred has elasticity.

Also included in transfer methods are a method including repeatedly performing unevenness transfer by use of a transfer roll having fine unevenness formed on its surface by electric discharging, shot blasting, laser machining or plasma etching and a method of bringing an aluminum plate into contact with a surface having fine particles applied thereto to form an un even pattern, applying a pressure thereon several times thereby to transfer the uneven pattern corresponding to the average diameter of the fine particles onto the aluminum plate repeatedly. A transfer roll having fine unevenness is obtainable by known methodsdescribed,e.g., inJP-A-3-8635, JP-A-3-66404, JP-A-63-65017. Fine parallel grooves may be cut on the surface of a roll in two directions by use of a die, a cutting tool or a laser to form rectangular unevenness on the surface. The thus engraved roll surface may be treated, for example, by etching so as to round the formed rectangular unevenness. The transfer roll may be subjected to quenching or plated with hard chromium to have increased surface hardness. Mechanical graining can also be effected by the method disclosed in JP-A-61-162351 and JP-A-63-104889. From the standpoint of productivity, the above described various mechanical graining techniques may be used in combination. It is preferred to carry out the mechanical graining before electrochemical graining.

### (2) Electrochemical graining

Electrochemical graining is carried out in an electrolyte used in ordinary electrochemical graining using an alternating current. A characteristic uneven surface profile can be formed by using an electrolyte mainly comprising hydrochloric acid or nitric acid. In the present invention, electrochemical graining is preferably performed in two-stage electrolysis in an acidic solution by applying an alternating electric current before and after cathodic electrolysis. By cathodic electrolysis, hydrogen gas evolves on the surface of an aluminum plate to produce smut, whereby the surface condition becomes uniform, which helps the subsequent electrolysis using an alternating electric current to accomplish uniform graining. The electrolytic graining is carried out in accordance with, for example, the electrochemical (or electrolytic) graining technique described in JP-B-48-28123 and British Patent 896,563. While the electrolytic graining described is conducted using a sinusoidal alternating electric current, a special waveform like the one described in JP-A-52-58602 may be used. The waveform described in JP-A-3-79799 is also useful. Other methods that are applicable to carry out electrolytic graining include those described in JP-A-55-158298, JP-A-56-28898, JP-A-52-58602, JP-A-52-152302, JP-A-54-85802, JP-A-60-190392, JP-A-58-120531, JP-A-63-176187, JP-A-1-5889, JP-A-1-280590, JP-A-1-118489, JP-A-1-148592, JP-A-1-178496, JP-A-1-188315, JP-A-1-154797, JP-A-2-235794, JP-A-3-260100, JP-A-3-253600, JP-A-4-72079, JP-A-4-72098, JP-A-3-267400 and JP-A-1-141094. It is also possible to carry out electrolysis using an alternating electric current having a specific frequency that has been proposed for use in the production of electrolytic capacitors as described, e.g., in U.S. Patents 4,276,129 and 4,676,879.

Various electrolytic cells and electric sources have been proposed for use in electrolytic graining. Those described in the following literature are employable: U.S. Patent 4,203,637, JP-A-56-123400, JP-A-57-59770, JP-A-53-12738, JP-A-53-32821, JP-A-53-32822, JP-A-53-32823, JP-A-55-122896, JP-A-55-132884, JP-A-62-127500, JP-A-1-52100, JP-A-1-52098, JP-A-60-67700, JP-A-1-230800, JP-A-3-257199, JP-A-52-58602, JP-A-52-152302, JP-A-53-12738, JP-A-53-12739, JP-A-53-32821, JP-A-53-32822, JP-A-53-32833, JP-A-53-32824, JP-A-53-32825, JP-A-54-85802, JP-A-55-122896, JP-A-55-132884, JP-B-48-28123, JP-B-51-7081, JP-A-52-133838, JP-A-52-133840, JP-A-52-133844, JP-A-52-133845, JP-A-53-149135 and JP-A-54-146234.

Examples of the acidic solution can be used as an electrolyte include, in addition to nitric acid and hydrochloric acid recited above, those described in U.S. Patents 4,671,859, 4,661,219, 4,618,405, 4,600,482, 4,566,960, 4,566,958, 4,566,959, 4,416,972, 4,374,710, 4,336,113 and 4,184,932.

In using a nitric acid-based electrolyte, pits having an average opening diameter of 0.5 to 5 µm can be formed. When a relatively large quantity of electricity is applied, the electrolysis is concentrated to make honeycomb pits exceeding 5 µm. To obtain such a grain structure, the total quantity of electricity that has been applied to carry out the anode reaction of the aluminum plate by the time of completion of the electrolytic reaction is preferably 1 to 1000 C/dm², still preferably 50 to 300 C/dm². The current density is preferably 20 to 100 A/dm². A small waviness having an average opening diameter of 0.2 µm or smaller can be formed by using a high concentration or high temperature nitric acid electrolyte.

Having per se strong dissolving power for aluminum, hydrochloric acid when used as an electrolyte is capable of forming fine surface unevenness by slight electrolysis. A fine surface unevenness having an average opening diameter of 0.01 to 0.2 µm can be uniformly formed over the entire surface of an aluminum plate. To obtain such a grain structure, the total quantity of electricity that has been applied to carry out the anode reaction of the aluminum plate by the time of completion of the electrolytic reaction is preferably 1 to 100 C/dm², still preferably 20 to 70 C/dm². The current density is preferably 20 to 50 A/dm².

In electrochemical graining using a hydrochloric acid-based electrolyte, the total electricity quantity to be applied to perform the anode reaction may be increased to 400 to 1000 C/dm² thereby to form crater-like large waviness at the same time. In this case, fine unevenness having an average opening diameter of 0.01 to 0.4 µm and crater-like waviness having an average opening diameter of 10 to 30 µm are superimposedly formed over the entire area of the aluminum plate.

### (3) Alkali etching

Alkali etching is a treatment in which the aluminum plate is brought into contact with an alkali solution to dissolve the skin layer of the aluminum plate.

In the case where the aluminumplate is not mechanically grained, alkali etching that is conducted before electrochemical graining is to remove a rolling-mill lubricant (in the case of a rolled aluminum plate), dirt, natural oxide film, and the like from the surface of the aluminum plate. In the case of the aluminum plate that has been mechanically grained, alkali etching before electrochemical graining is to round off the sharp edges of the surface unevenness resulting from the mechanical graining.

When alkali etching is not preceded by mechanical graining, the amount of etching (the amount of aluminumetched away) is preferably 0.1 to 10 g/m², still preferably 1 to 5 g/m². When this amount of etching is less than 0.1 g/m², the surface rolling-mill lubricant, dirt, natural oxide film, etc. can remain, resulting in a failure to form uniform pits in second stage electrolytic graining. When the amount of etching is within the recited preferred range, the rolling-mill lubricant, dirt, natural oxide film, etc. can sufficiently be removed from the surface. Etching to a degree higher than 10 g/m² only results in economical disadvantage.

In the case when alkali etching is preceded by mechanical graining, the amount of etching is preferably 3 to 20 g/m², still preferably 5 to 15 g/m². When that amount is less than 3 g/m², the etching treatment can fail to round off the sharp unevenness formed by the mechanical graining, or the second stage electrolytic graining can fail to form uniform pits, or printing using the resulting lithographic printing plate can involve accelerated smearing. When the amount of etching exceeds 20 g/m², the surface unevenness can disappear.

Alkali etching directly following electrolytic graining is to dissolve the smut generated in the acidic electrolyte and to dissolve the edges of the pits formed by the electrolytic graining. A preferred amount of etching varies because the pit structure formed by electrolytic graining varies depending on the electrolyte used. Generally, the amount of etching in alkali etching conducted after electrolytic graining preferably ranges from 0.1 to 5 g/m². In the case of using a nitric acid-based electrolyte in the electrolytic graining, the etching amount should be somewhat larger than that in the case of using a hydrochloric acid-based electrolyte. In the case where electrolytic graining is repeated, every electrolytic graining treatment may be followed by alkali etching if needed.

Examples of the alkali that can be used in the alkali etchant include caustic alkalis and alkali metal salts. Specific examples of caustic alkalis are caustic soda and caustic potash. Specific examples of alkali metal salts include alkali metal silicates, such as sodiummetasilicate, sodium silicate, potassium metasilicate, and potassium silicate; alkali metal carbonates, such as sodium carbonate and potassium carbonate; alkali metal aluminates, such as sodium aluminate and potassium aluminate; alkali metal aldonates, such as sodium gluconate and potassium gluconate; and alkali metal hydrogenphosphates, such as sodium secondary phosphate, potassium secondary phosphate, sodium tertiary phosphate, and potassium tertiary phosphate. *Inter alia,* a caustic alkali solution or a solution containing a caustic alkali and an alkali metal aluminate is preferred for high etching rate and inexpensiveness. A caustic alkali aqueous solution is particularly preferred.

### (4) Desmutting

Electrolytic graining or alkali etching is followed by pickling (Desmutting) to remove smut remaining on the aluminum plate surface. Examples of the acid to be used for desmutting include nitric acid, sulfuric acid, phosphoric acid, chromic acid, hydrofluoric acid, and fluoroboric acid. Desmutting is carried out by bringing the aluminum plate into contact with an acidic solution containing 0.5% to 30% by weight of hydrochloric acid, nitric acid, sulfuric acid, etc. (containing 0.01% to 5% by weight of an aluminum ion). The contact between the aluminum plate and the acidic solution is achieved by passing the aluminum plate through a tank filled with the acidic solution, dipping the aluminum plate in a tank filled with the acidic solution or spraying the acidic solution to the aluminum plate. Nitric acid- or hydrochloric acid-based waste liquid discharged from the above described electrolytic graining unit or sulfuric acid-based waste liquid from an anodizing unit hereinafter described can be used as the acidic solution in the desmutting. The desmutting is preferably conducted at a liquid temperature of 25° to 90°C for 1 to 180 seconds. The acidic solution used for desmutting may have aluminum or an aluminum alloy component dissolved therein.

### (5) Anodizing

Where necessary, the thus grained aluminum plate is subjected to alkali etching followed by neutralization. The aluminum plate is then subjected to anodizing where it is desired to increase the surface water receptivity and wear resistance. Various electrolytes capable of forming a porous oxide film (anodized layer) are useful to effect anodizing. Sulfuric acid, phosphoric acid, oxalic acid, chromic acid or a mixture thereof is usually employed. The concentration of the electrolyte is decided as appropriate for the type of the electrolyte used.

While the conditions for anodizing depend on the electrolyte, satisfactory results are obtained under the following conditions: electrolyte's concentration, 1% to 80% by weight; liquid temperature, 5° to 70°C. ; current density, 5 to 60 A/dm²; voltage, 1 to 100 V; and electrolysis time, 10 seconds to 5 minutes. The anodized layer thickness is suitably 2.0 g/m². When it is less than 2.0 g/m², the resulting lithographic printing plate is easily scratched on its nonimage area, which can cause ink smearing (ink adhesion to the nonimage area).

### (6) Hydrophilization

Although the anodized layer works as a water wettable (hydrophilic) surface, it is preferably subjected to further hydrophilization. The term "water wettable (or hydrophilic)" means having a water contact angle smaller than 10°, preferably smaller than 5°. Hydrophilization is preferably such that a hydrophilizing compound is adsorbed onto the anodized layer.

Examples of suitable hydrophilization treatments include potassium fluorozirconate treatment (seeU.S. Patent 2,946,638), phosphomolybdate treatment (see U.S. Patent 3,201,247), alkyl titanate treatment (see British Patent 1,108,559), polyacrylic acid treatment (see German Patent 1,091,433), polyvinylphosphonic acid treatment (see German Patent 1, 134, 093 and British Patent 1,230,447), phosphonic acid treatment (see JP-B-44-6409), phytic acid treatment (see U.S. Patent 3, 307, 951), treatment with a divalent metal salt of a lipophilic organic polymer (see JP-A-58-16893 and JP-A-58-18291), and immersing in a polysulfonic acid compound such as Tamol.

Hydrophilization can also be achieved by providing an undercoat using a phosphate (see JP-A-62-19494), a water soluble epoxy compound (see JP-A-62-33692), a phosphoric acid-modified starch (see JP-A-62-97892), a diamine compound (see JP-A-63-56498), an organic or inorganic acid salt of an amino acid (see JP-A-63-130391), an organic phosphonic acid containing a carboxyl group or a hydroxyl group (see JP-A-63-145092), a compound having an amino group and a phosphonic acid group (see JP-A-63-165183), a specific carboxylic acid derivative (see JP-A-2-316290), a phosphoric ester (see JP-A-3-215095), a compound having one amino group and one phosphorus oxyacid group (see JP-A-3-261592), an aliphatic or aromatic phosphonic acid, e.g., phenylphosphonic acid (see JP-A-5-246171), a sulfur-containing compound, e.g., thiosalicylic acid (see JP-A-1-307745), a compound having a phosphorus oxyacid group (see JP-A-4-282637), and so forth. Coloring using an acid dye as described in JP-A-60-64352 is adoptable.

Hydrophilization is preferred achieved by treating with an aqueous solution of an alkali metal silicate, such as sodium silicate or potassium silicate, by, for example, immersion.

The amount of silicon to be adhered is preferably 1.0 to 20. 0 mg/m², still preferably 2. 0 to 17. 0 mg/m². With this amount being 1.0 mg/m² or more, the resulting lithographic printing plate exhibits good resistance to smearing. With the amount of silicon being 20.0 mg/m² or less, a lithographic printing plate with a long press life, particularly after a burning-in treatment, can be obtained.

Each of the aforementioned surface treatments is preferably followed by washing with water. Pure water, well water, tap water or like water can be used in the washing. In order to prevent carryover of a treating solution from the precedent treatment into the next, the plate may be squeegeed between nip rollers.

In place of the aluminum support, a polyester film or paper support having an appropriate coating layer on its surface is also suitably used in the present invention. Such a support is exemplified by the support disclosed in JP-A 2003-118254 that has a coating layer comprising porous filler particles and a binder system containing a composite of a resin having a metal atom and/or a semimetal atom bonded thereto via an oxygen atom and a specific polymer and the support disclosed in JP-A-2003-19873 that has a coating layer comprising (1) porous filler particles, (2) at least one metal alcoholate compound selected from a metal alcoholate, a chelate compound obtained by the reaction between the metal alcoholate and a β-diketone and/or a β-ketoester, and a partial hydrolysis product obtained by allowing the chelate compound to react with water, and (3) a binder system containing a composite of a resin having a metal atom and/or a semimetal atom bonded thereto via an oxygen atom and an organic polymer capable of forming a hydrogen bond with the resin.

### [III] Ink receptive layer

An ink receptive layer containing a water soluble polymer is provided on the thus prepared support to make an ink receptor.

The water soluble polymer that can be used in the invention is preferably a compound having solubility of at least 1 g in 100 g of water at room temperature (e.g., 25°C) . The water soluble compound preferably has film forming properties. In this regard, the water soluble polymer preferably has a weight average molecular weight of more than 1000, still preferably 3000 to 1,000,000. Examples of preferred water soluble polymers include (1) (meth)acrylic resins, styrene resins or modified cellulose each having a carboxyl group or a salt thereof, (2) (meth)acrylic resins, vinyl resins or styrene resins each having a sulfonic acid group or a salt thereof, (3) polymers having an amido group such as polyacrylamide and polyvinylpyrrolidone, (4) polymers having a hydroxyl group such as polyvinyl alcohol, (5) resins having a phosphoric acid group or a salt thereof such as the phosphoric acid-modified starch disclosed in JP-A-62-097892, (6) polymers having an onium group (for the details refer to JP-A-2000-10292 and JP-A-2000-108538), (7) polymers having a structural unit typified by poly (p-vinylbenzoic acid) in the molecule thereof, such as p-vinylbenzoic acid/vinylbenzyltriethylammonium salt copolymers and p-vinylbenzoicacid/vinylbenzyltrimethylammonium chloride copolymers, and (8) copolymers comprising a repeating unit containing at least one ethylenically unsaturated bond and a repeating unit containing at least one functional group mutually acting on the surface of a support as described in JP-A-2005-125749. Preferred of them are resins having a carboxyl group, a sulfonic acid group or a phosphoric acid group.

The ink receptive layer may further contain a non-polymeric water soluble compound such as sodium dodecylbenzenesulfonate in addition to the above described water soluble polymer.

The ink receptive layer may contain a colorant. Dyes having a salt structure in the molecule are preferred colorants. Dyes having such a structure include cyanine dyes, merocyanine dyes, triphenylmethane dyes, azo dyes, metal complex azo dyes, pyrazolone azo dyes, naphthoquinone dyes, anthraquinone dyes, phthalocyanine dyes, carbonium dyes, quinoneimine dyes, methine dyes, cyanine dyes, squaryliumdyes, pyryliumdyes, and metal thiolate complexes. Fluorescent or phosphorescent dyes are also useful.

The salt structure is preferably an ammonium salt or sulfonic acid salt structure, with a sulfonic acid salt structure being still preferred. The ammonium salt structure may be present in the chromophore or develop as a resonance structure.

A coating composition providing the ink receptive layer preferably contains a fluorine-containing or silicon-containing surface active agent to reduce coating unevenness. Known surface active agents can be used for that purpose.

Fluorine-containing surface active agents are particularly preferred, including copolymers of a (meth)acrylate having a fluoro aliphatic group and a polyoxyalkylene (meth)acrylate. The proportion of the repeating unit derived from the (meth)acrylate having a fluoro aliphatic group in the copolymer is preferably 7% to 60% by weight. The copolymer preferably has a molecular weight of 3000 to 100,000. Such F-containing surface active agents are commercially available. Two or more kinds of F-containing surface active agents can be used in combination. Examples of useful commercially available F-containing surface active agents that can be used in the invention are Surflon S-111, S-112, S-113, S-121, S-131, S-141, S-145, S-381, and S-382 (fromAsahi Glass Co. , Ltd.); Megafac F-110, F-120, F-142D, F-150, F-171, F-177, and F-781 from Dainippon Ink & Chemicals, Inc.; Florad FC 93, FC 95, FC 98, FC 129, FC 135, FX 161, FC 170C, FC 171, and FC 176 from Sumitomo 3M Co., Ltd.; and FT 248, FT 448, FT 548, FT 624, FT 718, and FT 738 from Bayer Japan, Ltd.

The surface active agent is used in an amount of 0.1% to 40% by weight, preferably 0.5% to 20% by weight, based on the ink receptive layer.

The coating composition providing the ink receptive layer may contain two or more kinds of the above described compounds.

The ink receptive layer can be provided in a known manner. In some detail, the water soluble polymer and necessary additives (e.g., a colorant and a surface active agent) are dissolved in water, an organic solvent (e.g., methanol, ethanol, methyl ethyl ketone or 1-methoxy-2-propanol) or a mixture thereof in a concentration of 0.005% to 10% by weight to prepare a coating composition, which is applied to a support and dried to form an ink receptor.

The ink receptive layer preferably contains the water soluble polymer in an amount of 1% to 99% by weight, still preferably 3% to 95% by weight, and 0.001% to 50% by weight, still preferably 0.01% to 20% by weight, of a colorant. The ink receptive layer preferably has a thickness of 20 to 1000 mg/m², still preferably 50 to 200 mg/m².

The ink receptive layer preferably has an optical density of 0.01 to 1.50, still preferably 0.05 to 0.50. The optical density can be measured, e.g., with a densitometer X-Rite from Nippon Lithograph, Inc. An ink receptive layer having an optical density of 0.01 or higher is easy to inspect for coating unevenness. At an optical density of 1.50 or less, there is little possibility of contamination of a fountain solution.

### [IV] Inkjet recording

The ink composition (hereinafter "ink") preferably has a viscosity of 1 to 50 mPa·s and a surface tension of 20 to 50 mN/m both measured at 25°C. In carrying out inkjet recording on an inkjet recording apparatus in practice, it is preferred that the ink temperature be kept at an almost constant temperature between 25°C and 100°C and that the viscosity at that time be in the range of from 3 to 20 mPa·s.

The ink is preferably held in a known type of an ink cartridge. The ink may be put in a deformable container to provide an ink tank cartridge as disclosed in JP-A-5-16377 . To provide a subtank stabilizes ink feed to a recording head as taught in JP-A-5-16382. The ink cartridge proposed in JP-A-8-174860 that is designed to move a valve so as to maintain stable ink feed even if the ink feed pressure decreases may be used. Methods of creating a negative pressure in such ink holding means to maintain an adequate meniscus in the head include use of the vertical position of the ink holding means, i.e., a water head difference, use of the capillarity of a filter provided in the ink channel, control of the pressure by use of a pump, etc., and use of the capillarity of an ink absorbent in which the ink is held as disclosed in JP-A-50-74341.

The ink can be fed from the ink holding means to a head either directly or via a channel such as a tube. The ink holding means and channel are preferably made of materials having good wettability with ink or materials having been treated to gain such wettability.

There are two types of ink jet recording, either of which is applicable in the invention: (1) continuous ink jet in which ink droplets are continuously ejected and their path is controlled by deflection in response to image information and (2) drop-on-demand ink jet in which ink droplets are ejected in response to image information signals. On-demand ejection mechanisms include a piezoelectric system in which pressure is applied to ink by a piezoelectric element to eject ink droplets (see JP-A-5-16349), a thermal system in which heat is applied to ink to create bubbles whereby to eject an ink droplet (see JP-A-1-234255), and a system in which ink ejection is controlled by an electric field (see JP-A-2001-277466).

Nozzle configurations that can be used in the invention include the one disclosed in JP-A-5-31908. Provision of a plurality of head units having a plurality of nozzle lines makes high speed recording feasible.

A nozzle configuration called line head or full multihead asdescribed,e.g., in JP-A-63-160849 is effective to achieve high speed image formation, in which ink is ejected from a line of nozzles arrayed to at least the width of an image, and a recording medium is moved simultaneously with the ink ejection.

The surface of a nozzle can be subjected to a surface treatment to prevent adhesion of ink droplets or ink mist to its surface as disclosed in JP-A-5-116327. Such a surface treatment can still fail to prevent adhesion of ink and other foreign matter. It is therefore preferred to clean the nozzles by wiping with a blade as proposed in JP-A-6-71904. In case ink is not ejected from nozzles equally, it is preferred to conduct flushing operation (an operation of ejecting ink in a region out of an image-forming region so as to feed fresh ink to the head) as described in JP-A-11-157102. By the flushing operation, the physical ink properties are maintained within proper ranges thereby to stabilize the meniscus. Yet, flushing can still fail to prevent air bubbles from entering the head or generating in the head. In such a case, ink may be sucked up from outside the head to dispose of the ink having changed in physical properties together with air bubbles as described in JP-A-11-334092. When ink ejection is suspended for a long time, the nozzle surface can be protected by covering with a cap as disclosed in JP-A-11-138830. Despite of these measures, a nozzle can come to fail to eject ink. Image formation with nozzles a part of which does not work results in such problems like uneven image formation. To avoid this, it is effective to detect an ink ejection failure and to take a necessary measure as disclosed in JP-A-2000-343686.

In order to maintain the ink viscosity constant during inkjet recording, it is preferred to maintain the ink temperature constant with a prescribed precision. To achieve this, the inkjet recording system preferably includes ink temperature monitoring means, ink heating means, and control means for controlling the heating in response to the monitored ink temperature. It is also preferred for the recording system to have control means for controlling energy applied to ink ejection means in accordance with the ink temperature.

In an inkjet recording system in which a head unit mechanically moves while the support moves intermittently in synchronization with the movement of the head unit in the direction perpendicular to the head unit moving direction to carry out striking ink droplets in superposition as described in JP-A-6-115099, there is produced the effect of invisualizing unevenness resulting from insufficient precision of the intermittent movement of the support. As a result, high image quality can be realized. In this recording system, the relation among the moving speed of the head, the amount of movement of the support, and the number of the nozzles can be designed appropriately thereby to establish a preferred relation between the recording speed and image quality. The similar effects are obtained when a recording head is fixed, and the support mechanically moves in prescribed opposite directions and, at the same time, intermittently moves in a direction perpendicular to the first said direction.

The diameter of an ink droplet landed on an ink receptive layer (dot diameter) is preferably between 5 and 500 µm, and thus the diameter of an ink droplet as it is ejected is preferably 5 to 200 µm, and the nozzle diameter is preferably 5 to 200 µm. In platemaking, the volume of an ink droplet ejected is preferably 20 pl or less, still preferably 10 pl or less.

The number of pixels per inch is preferably 50 to 4000 dpi, and thus the nozzle density of a recording head is preferably 10 to 4000 dpi. Even if the nozzle density is low (i.e., the distance between nozzles is large), it is possible to realize a high dot density by tilting the head about the support' s moving direction or by arranging the head units out of alignment with each other. In the case of the above described system in which a head or the support moves reciprocally, high density image recording can be realized by moving the support by a predetermined amount every time the head moves at a low nozzle pitch thereby to place ink droplets at different positions.

If the head-to-support distance is too large, the ink droplet flight path is disturbed by air flow accompanying the head or support movement, resulting in reduction of dot placement accuracy. If the distance is too short, on the other hand, there is a fear that the head and the support come into contact due to the surface unevenness of the support or a vibration of the carriage mechanism. Accordingly, the head-to-support distance is preferably maintained between about 0.5 to 2 mm.

### [V] Solvent removal

The image formed on the ink receptor is then heated at a temperature of 45°C or lower to evaporate the solvent. Heating means is not particularly limited. For example, a panel heater, an infrared lamp or hot air can be used. Hot air is not preferred because a hot air stream might deform the ink dots if its velocity is high. A preferred velocity is 3 m/s or lower, still preferably 2 m/s or lower. The heating temperature is preferably 40°C or lower. It is also a preferred embodiment that the solvent is volatilized at room temperature without being heated.

The image area after the solvent removal preferably has a thickness (height) of 3 µm or smaller, still preferably 2 µm or smaller.

### [VI] Gumming

The resulting printing plate having an image formed thereon may be subjected to a gumming treatment using a gumming solution containing, for example, gum arabic or a starch derivative and a surface active agent before going on-press. Suitable gumming solutions are described in JP-B-62-16834, JP-B-62-25118, JP-B-63-52600, JP-A-62-7595, JP-A-62-11693, JP-A-62-83194. It is preferred that the ink receptive layer of the nonimage area be dissolved and removed by the gumming solution in this gumming treatment. The lithographic printing plate thus obtained is ready to be used on a lithographic printing machine in a usual manner. The printing plate not having been treated with a gumming solution is also ready to be on a press as well.

### [VII] Fountain solution (or dampening solution)

Any fountain solution that is used in printing on an ordinary lithographic printing plate with an ordinary ink can be used in the invention. Widespread Dahlgren alcohol dampening systems using isopropyl alcohol-containing dampening solutions (isopropyl alcohol content: about 20% to 25%) can be used. Dampening systems having introduced a technique of substitution for isopropyl alcohol are also available, which have been developed because, for one thing, isopropyl alcohol has an inherent unpleasant smell and, for another, isopropyl alcohol is problematical in terms of toxicity and is defined as a second-class organic solvent in Ordinance on Prevention of Organic Solvent Poisoning (The Ministry of Labor, Japan). Techniques of using nonvolatile or high-boiling compounds in place of isopropyl alcohol have also been developed. For example, a fountain solution containing a specific alkylene oxide type nonionic surface active agent and a fountain solution containing an ethylene oxide/propylene oxide adduct of an alkylenediamine are useful.

### EXAMPLES

The present invention will now be illustrated in greater detail with reference to Examples, but it should be understood that the invention is not construed as being limited thereto. Unless otherwise noted, all the percents are by weight.

### Example 1

### Preparation of support

### Preparation of aluminum plate

An aluminum alloy containing Si 0.06%, Fe 0.30%, Cu 0.005%, Mn 0.001%, Mg 0.001%, Zn 0.001%, Ti 0.03%, and the rest of Al and unavoidable impurity was melted. After subjected to molten metal treatment and filtration, the molten metal was cast by a direct chill casting method to obtain ingot measuring 500 mm in thickness and 1200 mm in width. The ingot was scalped to a thickness of 10 mm in average and homogenized at 550°C for about 5 hours. After the temperature of aluminum plate dropped to 400°C, the plate was rolled to a thickness of 2.7 mm in a hot rolling mill. The rolled plate was heat treated at 500°C in a continuous annealing furnace and cold-rolled to a thickness of 0.24 mm to obtain an aluminum plate according to JIS 1050. The aluminum plate was cut to a width of 1030 mm.

### Surface treatment

The aluminum plate was successively subjected to surface treatments (a) to (j) in the order described. The plate was squeegeed between nip rollers after each surface treatment and after washing.

### (a) Mechanical graining

The aluminum plate was grained with a rotating nylon brush and an aqueous slurry of pumice stone having a specific gravity of 1.12.

### (b) Alkali etching

The aluminum plate was sprayed with an aqueous solution containing 2.6% caustic soda and 6.5% aluminum ion at 70°C to etch away 6 g/_{M}² of aluminum. The aluminum plate was then washed with water spray.

### (c) Desmutting

A 1% nitric acid aqueous solution (containing 0.5% aluminum ion) at 30°C was sprayed to the aluminum plate to carry out desmutting. The aluminum plate was then washed with water spray. The nitric acid aqueous solution used for desmutting was the waste water from the electrochemical graining step (d) (described below) using a nitric acid aqueous solution and an alternating current.

### (d) Electrochemical graining

The aluminum plate was subjected to electrochemical graining. Electrolysis was continuously conducted using a 50°C, 10.5 g/l aqueous solution of nitric acid (containing 5 g/l aluminum ion and 0.007% ammonium ion) as an electrolyte, a carbon counter electrode, and a 60 Hz alternating voltage. The time Tp required for the electric current to rise from zero to the peak current was 0.8 msec. Trapezoidal wave alternating current was used at a duty ratio of 1:1. Ferrite was used as an auxiliary anode. The current density was 30 A/dm² at the peak. The total quantity of electricity applied to the aluminum plate acting as an anode was 220 C/dm². Five percent of the current from the power source was shunted to the auxiliary anode. After the electrochemical graining, the aluminum plate was washed by water spray.

### (e) Alkali etching

An aqueous solution containing 26% caustic soda and 6.5% aluminum ion at 32°C was sprayed to the aluminum plate to etch away 0.25 g/m² of aluminum, thereby to remove the smut mainly comprising aluminum hydroxide resulting from the electrochemical graining (d) and to round off the edges of the pits formed by the electrochemical graining. The aluminum plate was washed by water spray.

### (f) Desmutting

A 15% nitric acid aqueous solution at 30°C (containing 4.5% aluminum ion) was sprayed onto the aluminum plate to effect desmutting, followed by washing with water spray. The nitric acid solution used for desmutting was the waste water from the electrochemical graining using a nitric acid aqueous solution and alternating electric current.

### (g) Electrochemical graining

The aluminum plate was subjected to electrochemical graining. Electrolysis was continuously conducted using a 35°C, 7.5 g/l aqueous solution of hydrochloric acid (containing 5 g/l aluminum ion) as an electrolyte, a carbon counter electrode, and a 60 Hz alternating voltage. The time Tp required for the electric current to rise from zero to the peak current was 0.8 msec. Trapezoidal wave alternating current was used at a duty ratio of 1:1. Ferrite was used as an auxiliary anode. The current density was 25 A/dm² at the peak. The total quantity of electricity applied to the aluminum plate acting as an anode was 50 C/dm². The aluminum plate was then washed by water spray.

### (h) Alkali etching

The aluminum plate was sprayed with an aqueous solution containing 26% caustic soda and 6.5% aluminum ion at 32°C to etch away 0.20 g/m² of aluminum, thereby to remove the smut mainly comprising aluminum hydroxide resulting from the electrochemical graining (g) and to round off the edges of the pits formed by the electrochemical graining (g). The aluminum plate was then washed with water spray.

### (i) Desmutting

A 25% sulfuric acid aqueous solution (containing 0.5% aluminum ion) at 60°C was sprayed to the aluminum plate to carry out desmutting. The aluminum plate was then washed with water spray.

### (j) Anodizing

The aluminum plate was subjected to anodizing using sulfuric acid as an electrolyte to form 2.7 g/m² of an anodized layer.

### Hydrophilization with silicate

The resulting aluminum support was immersed in an aqueous solution of water glass (No. 3 according to JIS) at 70°C for 13 seconds, washed with water, and dried. The resulting support had a surface roughness Ra of 0.55 µm as measured with a profilometer Surfcom 575A from Tokyo Seimitsu Co., Ltd. at a cuff-off length of 0.8 mm over an assessment length of 3 mm. Measurement was taken 5 times to obtain an average Ra.

### Ink receptive layer

A coating composition shown in Table 1 below was applied to the support with a wire bar and dried at 80°C for 15 seconds to form an ink receptive layer. The coating thickness was 80 mg/m², and the optical density of the resulting receptive layer was 0.1 as measured with X-Rite.

**Table 1**

| Function | Kind | Amount |
|---|---|---|
| water soluble polymer | poly(sodium p-styrenesulfonate)* | 0.25 g |
| water soluble compound | sodium dodecylbenzenesulfonate | 0.20 g |
| colorant | Acid Violet 34 (dye) | 0.05 g |
| surface active agent (coating aid) | F-containing surfactant** | 0.0005 g |
| | ion exchanged water | 60 g |
| | methanol | 40 g |

| | | |
|---|---|---|
| * Weight average molecular weight: 70000 ** 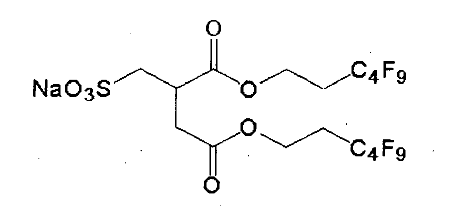 | | |

### Preparation of ink composition

An ink composition was prepared according to the formulation of Table 2.

**Table 2**

| Function | Kind | Amount (part) |
|---|---|---|
| oleophilic polymer | methyl methacrylate-methacrylic acid copolymer (75:25 by mole; Mw: 12,000) | 15.5 |
| dye | Oil Blue N (from Aldrich) | 1.5 |
| organic solvent | propylene glycol monomethyl ether acetate (b. pt.: 146°C, from Tokyo Kasei Kogyo) | 83 |

The ink composition had a viscosity of 9.1 mPa·s and a surface tension of 29.5 mN/m both at 25°C.

The oleophilic polymer had a solubility of 1.5 g or less in 100 g of 25°C water.

### Ink jet recording

An image was inkjet recorded on the ink receptive layer of the support using the ink composition.

A head scanning inkjet printer having one shear mode piezo head CA3 from Toshiba Tec Corp. (minimum droplet volume: 6 pl; number of nozzles: 318; nozzle density: 150 nozzles/25.4 mm) mounted on a movable printer carriage was used. The ink was put in a 2-liter ink tank capable of applying reduced pressure, degassed under reduced pressure of-40 kPa to be freed of dissolved gas, and led to the head via a hydrostatic pressure control tank (capacity: 50 ml) and a Teflon™ soft tube (inner diameter: 2 mm). The inner pressure of the head was adjusted to-6.6 kPa by controlling the position of the hydrostatic pressure tank with respect to the head, whereby the meniscus at the nozzles was controlled. The ink temperature in the head was maintained at 45°C by means of a water circulator thermostat CH-201 from Scinics Corp. The head was driven at a voltage of 24 V to eject ink in an 8-level multidrop mode or a binary mode at a dot frequency of 4.8 kHz or 12 kHz, respectively. The pixel pitch was 600 dpi in the head scanning direction (scanning speed: 203 mm/s) multiplied by 600 dpi in the media moving direction in the case of multidrop mode or 1200 dpi in the heat scanning direction (scanning speed: 254 mm/s) multiplied by 600 dpi in the media moving direction. That is, the printer recorded an image in a 2 pass interlaced mode while serially moving the lithographic printing plate precursor. The printer had head cleaning means comprising a nonwoven fabric with which the nozzle plate of the head was wiped in a non-contact mode.

The inkjet recorded image layer was dried with a dryer that blew 40°C air at a velocity of 0.5 m/s to remove the solvent. A lithographic printing plate having an image area was thus obtained.

### Evaluation

### (a) Height of image area

The height of the image area formed after drying was measured by SEM observation. The maximum height was found to be 1 µm. An image area height was graded "good" (3 µm or smaller) or "no good" (higher than 3 mµ).

### (b) Beading

The beading phenomenon of the ink composition was evaluated in terms of tonal value loss as a deviation of the tonal value of the resulting printing plate from the tonal value of 100% of the image data. The tonal value reproduced was 98%. The resistance to beading was graded A (tonal value of 95% or larger), B (tonal value of 90% or larger and smaller than 95%), C (tonal value of 85% or larger and smaller than 90%), or D (tonal value of smaller than 85%).

### (c) Dot gain on press

Printing was carried out using the resulting lithographic printing plate. The tonal value of the printed image corresponding to an image area having a tonal value of 50% on the printing plate was measured. As a result, the tonal value of the printed image was 71%, indicating a printing dot gain of 21%. The dot gain on press was graded "good" (30% or less) or "no good" (more than 30%).

### (d) Press life

The press life of the printing plate was evaluated by the number of prints obtained by the time when the ink density (reflection density) reduced by 0.1 from the initial density. As a result, the press life was 300, 000. The press life was graded "good" (5000 or more) or "no good" (less than 5000).

### (e) Registration accuracy

The lithographic printing plates were made in duplicate, and the relative positions of the registration marks were compared. As a result, a positional deviation between the corresponding registration marks of the two plates was only 50 µm. The registration accuracy was grated A (deviation of 50 µm or smaller), B (deviation of greater than 50 µm and not over 75 µm), or C (deviation over 75 µm).

### Example 2

The same procedures of Example 1 were followed, except for using the following ink composition.

**Table 3**

| Function | Kind | Amount (part) |
|---|---|---|
| oleophilic polymer | methyl methacrylate-methacrylic acid copolymer (75:25 by mole; Mw: 12,000) | 16.0 |
| dye | Oil Blue N (from Aldrich) | 1.5 |
| organic solvent | propylene glycol monomethyl ether acetate (b. pt.: 121°C, from Tokyo Kasei Kogyo) | 82.5 |

The ink composition had a viscosity of 9.0 mPa·s and a surface tension of 28.5 mN/m both at 25°C.

### Example 3

The same procedures of Example 1 were followed, except for using the following ink composition.

**Table 4**

| Function | Kind | Amount (part) |
|---|---|---|
| oleophilic polymer | methyl methacrylate-methacrylicacid copolymer (75:25 by mole; Mw: 12, 000) | 14.5 |
| dye | Oil Blue N (from Aldrich) | 1.5 |
| organic solvent | diethylene glycol diethyl ether (b. pt.: 188°C, from Tokyo Kasei Kogyo) | 84.0 |

The ink composition had a viscosity of 9.1 mPa·s and a surface tension of 28.0 mN/m both at 25°C.

### Comparative Example 1

The same procedures of Example 1 were followed, except for using the following ink composition.

**Table 5**

| Function | Kind | Amount (part) |
|---|---|---|
| oleophilic polymer | methyl methacrylate-methacrylicacid copolymer (75:25 by mole; Mw: 12,000) | 6.5 |
| dye | Oil Blue N (from Aldrich) | 1.5 |
| organic solvent | tripropylene glycol monomethyl ether (b. pt.: 242°C, from Tokyo Kasei Kogyo) | 92.0 |

The ink composition had a viscosity of 9.1 mPa·s and a surface tension of 30.0 mN/m both at 25°C.

The results of evaluations in Examples 1-3 and Comparative Example 1 are shown in Table 6 below. In Table 6 and thereafter, PGMEAc stands for "propylene glycol monomethyletheracetate";MMPG"propyleneglycolmonomethyl ether; DEDG "diethylene glycol diethyl ether"; and TPM "tripropylene glycol monomethyl ether".

**Table 6**

| | Example 1 | Example 2 | Example 3 | Comp. Example 1 |
|---|---|---|---|---|
| Solvent | PGMEAc | MMPG | DEDG | TPM |
| Boiling Point (°C) | 146 | 121 | 188 | 242 |
| Heating Temp. (°C) | 40 | 40 | 40 | 40 |
| Beading | A | A | B | D |
| Image Area Height | good | good | good | undeterminable |
| Dot Gain on Press | good | good | good | undeterminable |
| Press Life | good | good | good | - |
| Registration Accuracy | A | A | A | undeterminable |

### Examples 4 to 7 and Comparative Example 2

The same procedures of Example 1 were followed, except for changing the drying temperature for solvent removal as shown in Table 7 below. In Comparative Example 2 where the drying temperature was raised to 55°C, the aluminum support was deformed and scratched by the recording head, failing to achieve registration accuracy.

**Table 7**

| | Example 4 | Example 5 | Example 6 | Example 7 | Comp. Example 2 |
|---|---|---|---|---|---|
| Solvent | PGMEAc | PGMEAc | PGMEAc | PGMEAc | PGMEAc |
| Boiling Point (°C) | 146 | 146 | 146 | 14 | 146 |
| Drying Temp. (°C) | 40 | 25 | 45 | 50 | 55 |
| Beading | A | A | A | A | A |
| Image Area Height | good | good | good | good | good |
| Dot Gain on Press | good | good | good | good | good |
| Press Life | good | good | good | good | good |
| RegistrationAccuracy | A | A | A | B | C |

### Comparative Example 3

A lithographic printing plate was made in the same manner as in Example 1, except for replacing the solvent ink composition with a UV curing ink SPC-0371M available from Mimaki Engineering Co., Ltd. Immediately after image formation by inkjet recording, the image layer was cured by exposure to light from two super high pressure mercury lamps SHP 150W from Phoenix Electric Co., Ltd. placed 10 cm above the image layer at a rate of 5 cm²/s.

The results of evaluations were:
Image height: 7 µm (no good)
Beading: 99% (A)
Dot gain on press: 40% (no good)
Press life: 500,000 (good)
Registration accuracy: 45 µm (A)

It is seen that the plate causes too much dot gain on press to be used for printing.

### Comparative Example 4

The procedures of Example 1 were followed, except that the aluminum support had no image receptive layer. The results of evaluations were:
Image height: unmeasurable (-)
Beading: unmeasurable (-)
Dot gain on press: 40% (no good)
Press life: 1000 (no good)
Registration accuracy: unmeasurable (-)

The image area suffered from feathering, and the height and the beading were unmeasurable. The dot gain on press was too much for the plate to be used for printing.

This application is based on Japanese Patent application JP 2006-257555, filed September 22, 2006, the entire content of which is hereby incorporated by reference, the same as if fully set forth herein.

Although the invention has been described above in relation to preferred embodiments and modifications thereof, it will be understood by those skilled in the art that other variations and modifications can be effected in these preferred embodiments without departing from the scope and spirit of the invention.

## Claims

1. An ink composition comprising: from 60% to 99% by weight of an organic solvent having a boiling point of from 110° to 210°C; a colorant; and from 0.5% to 35% by weight of an oleophilic polymer.

2. The ink composition as claimed in claim 1, which is for forming an image by inkjet recording on an ink receptive layer containing a water soluble polymer and provided on a support.

3. The ink composition as claimed in claim 1 or 2, wherein the boiling point is from 120° to 200°C.

4. The ink composition as claimed in any one of claims 1 to 3, wherein the ink composition comprises from 65% to 98% by weight of the organic solvent.

5. The ink composition as claimed in any one of claims 1 to 4, wherein the ink composition comprises from 1% to 30% by weight of the oleophilic polymer.

6. The ink composition as claimed in any one of claims 1 to 5, wherein the ink composition comprises from 0.5% to 5% by weight of the colorant.

7. A process for making a lithographic printing plate, comprising:
forming an image on an ink receptive layer containing a water soluble polymer and provided on a support by inkjet recording using the ink composition as claimed in claim 1; and
evaporating the solvent from the image formed of the ink composition at a temperature of 45°C or lower.

8. The process as claimed in claim 7, wherein the temperature is 40°C or lower.
